# EUROPÄISCHE PATENTANMELDUNG

(11) **EP 3 721 694 A1**
(43) Veröffentlichungstag der Anmeldung: **14.10.2020**
(21) Anmeldenummer: 19168546.0
(22) Anmeldetag: 10.04.2019
(51) Int. Cl.: A01D 34/33, F16C 35/067, F16C 19/38, F16C 23/08

(54) **KOPFLAGER ZUM VERBINDEN EINES MÄHMESSERS MIT EINEM MÄHMESSERANTRIEB**

(71) Anmelder: SMF - Holding GmbH, 57612 Eichelhardt (DE)
(72) Erfinder: SCHUMACHER, Heinrich-Günter, 57612 Eichelhardt (DE)
(74) Vertreter: Neumann Müller Oberwalleney & Partner Patentanwälte

(57) **Zusammenfassung**

Die Erfindung betrifft ein Kopflager zum Verbinden eines Mähmessers mit einem Mähmesserantrieb, umfassend: einen Mitnehmerzapfen (29), der eine Längsachse (5') definiert, ein Rotationslager (32) mit einer sphärischen Außenfläche (21) und einen Spanntopf (15) mit einer komplementär zur Außenfläche (21) des Rotationslagers (32) gestalteten sphärischen Innenfläche (18), wobei das Rotationslager (32) auf dem Mitnehmerzapfen (29) sitzt und von der sphärischen Innenfläche (18) des Spanntopfes (15) aufgenommen ist, wobei der Spanntopf (15) zumindest zwei zusammengefügte separate Bauteile, nämlich ein Bodenelement (44) und ein Hülsenelement (45), umfasst.

## Beschreibung

Die Erfindung betrifft ein Kopflager zum Verbinden eines Mähmessers mit einem Mähmesserantrieb, umfassend: einen Mitnehmerzapfen, der eine Längsachse definiert, ein Rotationslager, mit einer sphärischen Außenfläche, und einen Spanntopf mit einer komplementär zur Außenfläche des Rotationslagers gestalteten sphärischen Innenfläche, wobei das Rotationslager auf dem Mitnehmerzapfen sitzt und von der sphärischen Innenfläche des Spanntopfes aufgenommen ist.

Eine solches Kopflager ist als Teil einer Verbindungsanordnung zum Verbinden eines Mähmesserantriebes mit einem Mähmesser aus der EP 2 319 287 B1 bekannt. Das Kopflager ist in eine Durchgangsbohrung eines Verbindungselementes, das zur Verbindung mit dem Mähmesser dient, eingesetzt. Das Kopflager umfasst ein Zwischenelement mit einer sphärischen Innenfläche und ein Rotationslager, das mit einer der sphärischen Innenfläche angepassten sphärischen Außenfläche in dem Zwischenelement aufgenommen ist. Das Zwischenelement ist topfförmig mit einer Wand und einem Boden gestaltet, wobei durch elastisches Aufweiten der Wand das Zwischenelement auf das Rotationslager montierbar ist.

Der Erfindung liegt die Aufgabe zugrunde, ein Kopflager zum Verbinden eines Mähmessers mit einem Mähmesserantrieb bereitzustellen, das eine erhöhte Lebensdauer und eine vereinfachte Montage ermöglicht.

Die Aufgabe wird erfindungsgemäß durch ein Kopflager zum Verbinden eines Mähmessers mit einem Mähmesserantrieb gelöst, umfassend: einen Mitnehmerzapfen, der eine Längsachse definiert, ein Rotationslager, mit einer sphärischen Außenfläche, und einen Spanntopf mit einer komplementär zur Außenfläche des Rotationslagers gestalteten sphärischen Innenfläche, wobei das Rotationslager auf dem Mitnehmerzapfen sitzt und von der sphärischen Innenfläche des Spanntopfes aufgenommen ist, wobei der Spanntopf zumindest zwei zusammengefügte separate Bauteile, nämlich ein Bodenelement und ein Hülsenelement, umfasst.

Das erfindungsgemäße Kopflager weist den Vorteil auf, dass für die Montage des Spanntopfes auf dem Rotationslager ein radiales Aufweiten des Spanntopfes zur Überwindung eines axialen Hinterschnitts zwischen dem Spanntopf und dem Rotationslager entfallen kann. Durch den zumindest zweiteiligen Aufbau des Spanntopfes können stattdessen das Bodenelement von einer ersten axialen Richtung und das Hülsenelement von einer zweiten axialen Richtung, die der ersten axialen Richtung entgegengesetzt ist, hinterschnittfrei über das Rotationslager geführt und nachfolgend miteinander verbunden werden. Es kann somit vermieden werden, dass der Spanntopf durch das Aufweiten zur Montage auf dem Rotationslager beschädigt wird. Darüber hinaus kann die Gefahr der Beschädigung an dem Rotationslager während der Montage des Spanntopfes verringert werden.

Bei dem erfindungsgemäßen Kopflager wird die sphärische Innenfläche des Spanntopfes durch eine Teilzahl von den Innenflächen der zumindest zwei separaten Bauteile gebildet. Im Bereich der axialen Anlage der zumindest zwei separaten Bauteile untereinander ergibt sich im montierten Zustand jeweils eine umlaufende Fuge auf der Innenfläche des Spanntopfes.

Umfasst der Spanntopf genau zwei Bauteile, nämlich das Bodenelement und das Hülsenelement, kann eine sphärische Innenfläche des Bodenelements und eine sphärische Innenfläche des Hülsenelements in axialer Richtung jeweils zueinander hinterschnittfrei angeordnet sein. Die sphärische Innenfläche des Bodenelements und die sphärische Innenfläche des Hülsenelements gehen sodann im Bereich der umlaufenden Fuge zumindest annähernd mit identischem Durchmesser ineinander über. Die sphärische Innenfläche des Spanntopfes setzt sich sodann aus der sphärischen Innenfläche des Bodenelements und der sphärischen Innenfläche des Hülsenelements zusammen.

Das Bodenelement und das Hülsenelement können in einem Verbindungsbereich miteinander gefügt sein. Das Bodenelement und das Hülsenelement können in dem Verbindungsbereich in radialer Überdeckung zueinander angeordnet sein. Hierzu kann das Bodenelement einen axial vorstehenden Kragen aufweisen und das Hülsenelement kann einen axial vorstehenden Kragen aufweisen, der in radialer Überdeckung mit dem Kragen des Bodenelementes angeordnet ist. Die axial vorstehenden Kragen des Bodenelementes und des Hülsenelementes können auch als Ringabsatz bezeichnet werden. Der Kragen des Bodenelementes kann radial innenliegend zum Kragen des Hülsenelementes angeordnet sein. Alternativ kann der Kragen des Hülsenelementes radial innenliegend zu dem Kragen des Bodenelementes angeordnet sein. Durch die radiale Überdeckung des Bodenelementes und des Hülsenelementes im Verbindungsbereich zueinander kann der Prozess des Verbindens bzw. des Fügens des Bodenelementes und des Hülsenelements vereinfacht werden. Hierzu kann insbesondere zumindest eines von dem Bodenelement und dem Hülsenelement eine axiale Anlagefläche aufweisen, an der im montierten Zustand der Kragen des anderen Bauteils von dem Bodenelement und dem Hülsenelement In axialer Richtung anliegt.

Das Bodenelement und das Hülsenelement können an ihren jeweiligen Kragen komplementäre Gewinde aufweisen, die gegenseitig in Eingriff sind.

Das Bodenelement und das Hülsenelement können zudem im Verbindungsbereich gefügt sein, insbesondere geschweißt, gelötet oder geklebt sein. Das Bodenelement und das Hülsenelement können im Verbindungsbereich durch eine Schweißnaht, beispielsweise durch eine Laserschweißnaht, gefügt sein, die sich durch einen von dem Kragen des Bodenelementes und dem Kragen des Hülsenelementes bis in den anderen von dem Kragen des Bodenelementes und dem Kragen des Hülsenelementes erstreckt. Eine Schweißnaht kann sich insbesondere durch den radial außen liegenden von dem Kragen des Bodenelementes und dem Kragen des Hülsenelementes hindurch bis in den anderen von dem Kragen des Bodenelementes und dem Kragen des Hülsenelementes erstrecken. Dies führt zu einem vereinfachten Schweißprozess. Darüber hinaus durchdringt die Schweißnaht somit die sphärische Innenfläche des Spanntopfes nicht, sodass Unebenheiten auf der sphärischen Innenfläche oder ein Nachbearbeiten der sphärischen Innenfläche vermieden werden können.

In einer möglichen Ausführungsform kann zudem der Kragen des Bodenelementes und der Kragen des Hülsenelementes mit einer Überdeckung in axialer und in radialer Richtung zueinander angeordnet sein. Das Bodenelement und das Hülsenelement sind somit jeweils mit einem Hinterschnitt zueinander angeordnet, sodass zwischen diesen eine Schnappverbindung gebildet ist.

Der Verbindungsbereich kann in radialer Überdeckung, bezogen auf eine Längsachse des Spanntopfes, mit dem Bereich des größten Innendurchmessers der sphärischen Innenfläche des Spanntopfes angeordnet sein. Bei koaxialer Anordnung des Spanntopfes mit dem Mitnehmerzapfen kann der Verbindungsbereich in radialer Überdeckung mit dem Bereich, bezogen auf die Längsachse des Mitnehmerzapfens, des größten Außendurchmessers der sphärischen Außenfläche des Rotationslagers sein. Insbesondere kann bei koaxialer Anordnung des Spanntopfes mit dem Mitnehmerzapfen ein axiales Ende des Verbindungsbereichs in radialer Überdeckung mit dem Bereich, bezogen auf die Längsachse des Mitnehmerzapfens, des größten Außendurchmessers der sphärischen Außenfläche des Rotationslagers ist. Hierdurch kann eine notwendige Aufweitung eines von dem Bodenelement und dem Hülsenelement zur Montage auf der sphärischen Außenfläche des Rotationslagers reduziert werden bzw. vollständig entfallen.

In einer möglichen Ausführungsform kann das Hülsenelement des Spanntopfes zumindest eine radiale Bohrung aufweisen, wobei bei koaxialer Anordnung des Spanntopfes mit dem Mitnehmerzapfen die zumindest eine radiale Bohrung teilweise in radialer Überdeckung mit der sphärischen Außenfläche des Rotationslagers angeordnet ist. Über die radiale Bohrung können Wasser und Verunreinigungen, die sich zwischen dem Spanntopf und der sphärischen Außenfläche des Rotationslagers sammeln, abgeführt werden. Durch die zumindest teilweise radiale Überdeckung der radialen Bohrung mit der sphärischen Außenfläche des Rotationslagers wird zudem sichergestellt, dass sich kein Wasser im Bereich der sphärischen Außenfläche des Rotationslagers dauerhaft ansammeln kann.

Bevorzugte Ausführungsbeispiele der Erfindung sind in den Zeichnungen schematisch dargestellt. Hierin zeigt
- Figur 1: eine Draufsicht auf eine Verbindungsanordnung zwischen einem Mähmesser und einem Mähmesserantrieb mit einem erfindungsgemäßen Kopflager in einer ersten Ausführungsform,
- Figur 2: eine Ansicht der Verbindungsanordnung aus Figur 1 in Pfeilrichtung X,
- Figur 3: einen Schnitt entlang der Längsachse des Mitnehmerzapfens durch die Verbindungsanordnung aus Figur 1,
- Figur 4: eine Frontansicht des Kopflagers aus Figur 1,
- Figur 5: eine Detailansicht des Spanntopfes aus Figur 1 in einem Längsschnitt,
- Figur 6: eine Detailansicht der Einzelheit Z aus Figur 5 mit dem Verbindungsbereich in einer ersten Ausgestaltung,
- Figur 7: eine Detailansicht der Einzelheit Z aus Figur 5 mit dem Verbindungsbereich in einer zweiten Ausgestaltung,
- Figur 8: eine Detailansicht der Einzelheit Z aus Figur 5 mit dem Verbindungsbereich in einer dritten Ausgestaltung,
- Figur 9: eine Detailansicht der Einzelheit Z aus Figur 5 mit dem Verbindungsbereich in einer vierten Ausgestaltung,
- Figur 10: eine Frontansicht eines erfindungsgemäßen Kopflagers in einer zweiten Ausführungsform, und
- Figur 11: einen Schnitt entlang der Schnittebene XI durch das Kopflager aus Figur 10.

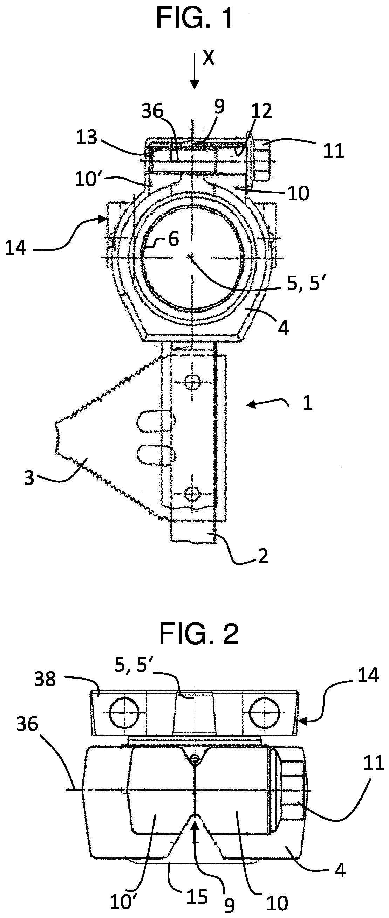

Die Figuren 1 bis 6, die im Folgenden gemeinsam beschrieben werden, zeigen ein erfindungsgemäßes Kopflager und dessen Anordnung in einer Verbindungsanordnung zum Verbinden eines Mähmesserantriebes mit einem Mähmesser. Aus der Ansicht gemäß Figur 1 ist ein Abschnitt eines Mähmessers 1 mit dem Messerrücken 2 und einer daran angebrachten Messerklinge 3 ersichtlich, wobei in der Blattebene in Verlängerung des Messerrückens 2 eine Vielzahl von solchen Messerklingen 3 an dem Messerrücken 2 angebracht sind. Am Ende des Messerrückens 2 ist ein, vorzugsweise metallisches, Verbindungselement 4 in Form eines Messerkopfauges angebracht, das eine erste Stirnfläche 7 und eine zweite Stirnfläche 8 und eine durch dasselbe hindurch verlaufende und sich zwischen den beiden Stirnflächen 7, 8 erstreckende Durchgangsbohrung 6 aufweist, die auf einer Längsachse 5 zentriert ist.

Wie insbesondere aus Figur 2 erkenntlich ist, ist das Verbindungselement 4 als offener Ring gestaltet. Es verläuft ein Spalt 9 zwischen den beiden Stirnflächen 7, 8. Der Spalt 9 verläuft parallel zur Längsachse 5. Er könnte auch unter einem Winkel zu derselben angeordnet sein.

Beidseitig des Spalts 9 befinden sich zwei von der Längsachse 5 weg vorstehende Ansätze 10, 10'. Der Ansatz 10 ist mit einer durchgehenden Bohrung 12 versehen, die auf einer Achse 36 angeordnet ist, welche die Längsachse 5 mit Abstand kreuzt. Auf der Achse 36 dieser Bohrung 12 ist in dem Ansatz 10' eine Gewindebohrung 13 angeordnet. Eine Spannschraube 11, die insbesondere als Kopfschraube ausgeführt sein kann, tritt durch die Bohrung 12 hindurch und wird in die Gewindebohrung 13 eingeschraubt, so dass sie eine Verringerung des Querschnittes der Durchgangsbohrung 6 des Verbindungselementes 4 bewirkt, je nachdem, wie stark die Spannschraube 11 angezogen wird. Grundsätzlich kann hier auch in beiden Ansätzen 10, 10' eine Durchgangsbohrung vorgesehen sein, durch die die Spannschraube 11 hindurch geführt ist, wobei diese dann mit einer Mutter zu verspannen ist.

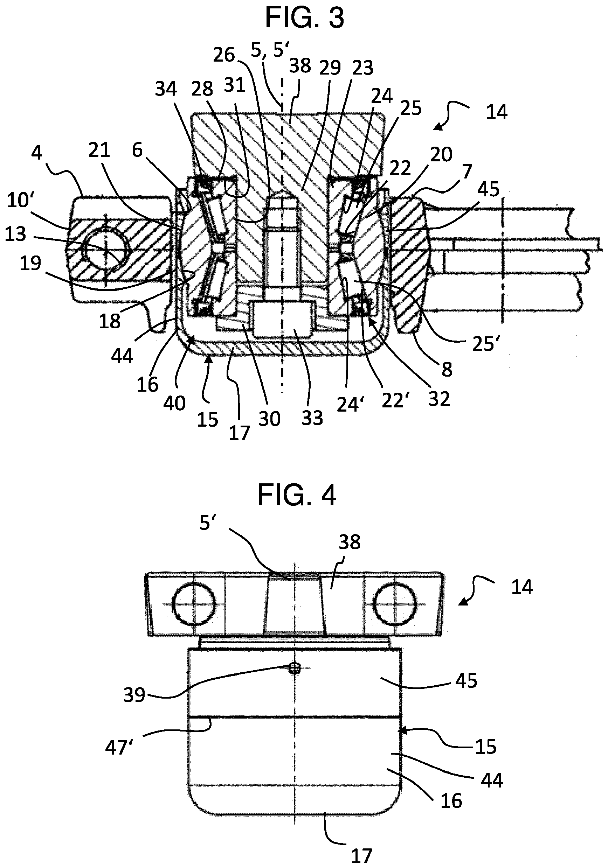

In der kreiszylindrischen Durchgangsbohrung 6 sitzt ein Kopflager 14 mit einem, vorzugsweise metallischen, Spanntopf 15, wie insbesondere aus den Figuren 2 und 3 ersichtlich wird. Dieser Spanntopf 15 weist eine um eine Längsachse 35 des Spanntopfes 15 umlaufende Wand 16 und einen den Spanntopf 15 einseitig abschließenden Boden 17 auf. Der Spanntopf 15 ist mehrteilig, im vorliegenden Fall zweiteilig, ausgeführt, und umfasst ein Bodenelement 44 und ein Hülsenelement 45, die in einem Verbindungsbereich 46 miteinander verbunden sind. In dem Verbindungsbereich 46 überlappen sich ein Ringabsatz 48 des Bodenelementes 44 und ein Ringabsatz 49 des Hülsenelementes 45 in radialer Richtung. Die Ringabsätze 48, 49 des Bodenelementes 44 bzw. des Hülsenelementes 45 können auch als axial vorstehender Kragen bezeichnet werden.

Das Bodenelement 44 umfasst den Boden 17 sowie einen Teil der Wand 16 des Spanntopfes 15. Das Hülsenelement 45 umfasst den anderen Teil der Wand 16 des Spanntopfes 15, sodass das Hülsenelement 45 und das Bodenelement 44 zusammen die Wand 16 bilden. Umfasst der Spanntopf 15 mehr als zwei Teile, so kann die Wand 16 von diesen mehr als zwei Teilen zusammen gebildet werden.

Die Wand 16 weist eine sphärische Innenfläche 18 und eine kreiszylindrische Außenfläche 19 auf. Die Wand 16 kann mit der kreiszylindrischen Außenfläche 19 in der kreiszylindrischen Durchgangsbohrung 6 des Verbindungselementes 4 aufgenommen werden und darin entlang der Längsachse 5 verstellt werden.

Die sphärische Innenfläche 18 wird im vorliegenden Fall von einer sphärischen Teilfläche 18' des Bodenelementes 44 und einer sphärischen Teilfläche 18" des Hülsenelementes 45 gebildet, die im Bereich einer innen umlaufenden Fuge 47 aneinander anschließen. Die umlaufende Fuge 47 ist dabei im Bereich des größten Innendurchmessers der sphärischen Innenfläche 18 angeordnet. Analog wird die kreiszylindrische Außenflächen 19 durch eine Teilfläche 19' des Bodenelementes 44 und einer Teilfläche 19" des Hülsenelementes 45 gebildet, die im Bereich einer außen umlaufenden Fuge 47' aneinander anschließen. Die innen umlaufenden Fuge 47 beschreibt somit ein erstes axiales Ende des Verbindungsbereiches 46 und die außen umlaufenden Fuge 47' beschreibt somit ein zweites axiales Ende des Verbindungsbereiches 46.

Der Spanntopf 15 ist vorzugsweise aus einem Stahl hergestellt, und kann dabei mit Kunststoff ummantelt, z.B. umspritzt sein. Zur Erhöhung der Wärmeleitfähigkeit können hierbei Metallpartikel in den Kunststoff eingebettet sein.

Das Kopflager 14 weist zudem ein Rotationslager auf, das als Wälzlager 32 ausgestaltet ist. Das Wälzlager 32 umfasst einen Lageraußenring 20, der in Umfangsrichtung geschlossen ist und eine sphärische Außenfläche 21 aufweist. Die sphärische Außenfläche 21 ist an die sphärische Innenfläche 18 des Spanntopfes 15 angepasst. Der Lageraußenring 20 ist durch diese Anordnung schwenkbar in dem Spanntopf 15 gehalten.

Der Lageraußenring 20 weist zwei kegelige Außenlaufbahnen 22, 22' auf, deren Durchmesser aufeinander zu abnimmt. Es ist ferner ein zweigeteilter Lagerinnenring 23 vorgesehen, so wie sie bei Kegelrollenlagern üblich sind. Der Lagerinnenring 23 weist zwei Innenlaufbahnen 24, 24' auf. Zwischen den Außenlaufbahnen 22, 22' des Lageraußenringes 20 und den Innenlaufbahnen 24, 24' des Lagerinnenringes 23 sind in Umfangsrichtung zwei Reihen von Wälzkörpern 25, 25' in Form von Kegelrollen angeordnet.

Der Lagerinnenring 23 bildet eine Aufnahmebohrung 26, die kreiszylindrisch gestaltet ist und in der ein Mitnehmerzapfen 29 eines Kopflagerhalters 38, der über Verbindungsmittel mit einem Mähmesserantrieb verbindbar ist, fest aufgenommen ist. Der Kopflagerhalter 38 ist über das Wälzlager 32 schwenkbar in dem Spanntopf 15 angeordnet. Der Mitnehmerzapfen 29 weist eine Längsachse 5' auf, die im nicht verschwenkten Zustand des Kopflagerhalters 38 gegenüber dem Spanntopf 15 koaxial mit der Längsachse 5 der Durchgangsbohrung 6 des Verbindungselementes 4 angeordnet ist.

Der Mitnehmerzapfen 29 endet in einer Schulter 31 des Kopflagerhalters 38. An diese Schulter 31 legt sich der Lagerinnenring 23 über einen Schutzring 28 an. Der Lagerinnenring 23 wird gegen diese Schulter 31 durch einen Befestigungsring 30 gepresst, der durch ein Befestigungsmittel in Form einer Schraube 33, die entlang der Längsachse 5' in den Mitnehmerzapfen 29 eingeschraubt ist, festgesetzt ist. Somit werden die beiden Lagerreihen des als Kegelrollenlager gestalteten Wälzlagers 32 vorgespannt. Das Wälzlager 32 kann aus metallischen Werkstoffen hergestellt sein, die für solche Lager und Belastungen, wie sie bei Mähmesserantrieben üblich sind, angemessen sind. Es versteht sich, dass grundsätzlich auch andere Wälzlager, z.B. ein zweireihiges Schrägkugellager, oder Gleitlager zum Einsatz kommen können.

Die Abdichtung des Wälzlagers 32 erfolgt einerseits in Richtung Boden 17 durch den topfförmigen Spanntopf 15 und andererseits in Richtung Schulter 31 durch eine Dichtung 34 und den Schutzring 28. Für das Ableiten von Wasser und Verunreinigungen, die sich zwischen dem Spanntopf 15 und dem Lageraußenring 20 des Wälzlager 32 ansammeln, kann das Hülsenelement 45 der Spanntopfes 15 eine Radialbohrung 39 aufweisen, die bei koaxialer Anordnung des Spanntopfes 15 mit dem Wälzlager 32 zumindest teilweise in radialer Überdeckung mit der sphärischen Außenfläche 21 des Wälzlagers 32 angeordnet ist.

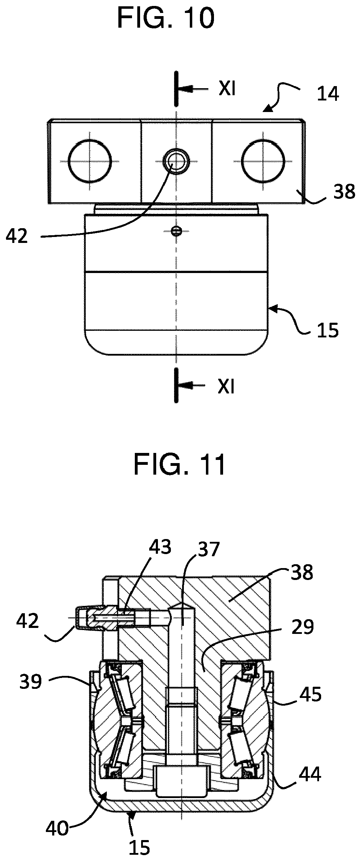

Das Kopflager 14 kann einen Schmiermittelraum 40 umfassen, der durch den Spanntopf 15 und durch die Dichtung 34 begrenzt wird. Wie in den Figuren 10 und 11 dargestellt, kann der Schmiermittelraum 40 optional über einen Schmiermittelkanal 37 im Kopflagerhalter 38 mit Schmiermittel versorgt werden. An einem Schmiermittelkanaleingang 43, der von außen zugänglich ist, kann dafür ein Schmiernippel 42 vorgesehen werden. Im Falle, dass ein Schmiermittelkanal 37 mit einem Schmiernippel 42 vorgesehen ist, muss für die Montage des Spanntopfes 15 gegebenenfalls zeitweise der Schmiernippel 42 entfernt werden.

Zur Montage des Spanntopfes 15 auf dem Lageraußenring 20 das Wälzlagers 32 wird das Bodenelement 44 aus einer ersten axialen Richtung, in Figur 3 von unten, und das Hülsenelement 45 aus einer zweiten axialen Richtung, die der ersten axialen Richtung entgegengesetzt ist, in Figur 3 von oben, auf den Lageraußenring 20 des Wälzlagers 32 aufgeschoben. Wie oben bereits erwähnt, ist die umlaufende Fuge 47 im Bereich des größten Innendurchmessers der sphärischen Innenfläche 18 des Spanntopfes 15 angeordnet. Darüber hinaus ist im koaxial montierten Zustand des Spanntopfes 15 auf dem Lageraußenring 20 des Wälzlagers 32 die umlaufende Fuge 47 im Bereich des größten Außendurchmessers der sphärischen Außenfläche 21 des Lageraußenrings 20 angeordnet. Somit können das Bodenelement 44 und das Hülsenelement 45 hinterschnittfrei auf den Lageraußenring 20 aufgeschoben werden. Ein radiales Aufweiten von zumindest einem von dem Bodenelement 44 und dem Hülsenelement 45 kann somit entfallen. Die Gefahr, dass durch das radiale Aufweiten das Bodenelement 44 und/oder das Hülsenelement 45 beschädigt werden, kann somit ausgeschlossen werden und die Gefahr einer Beschädigung der Außenfläche 21 des Lageraußenrings 20 bzw. der Innenfläche 18 des Spanntopfes 15 beim Montieren des Spanntopfes 15 auf dem Lageraußenring 20 des Wälzlagers 32 kann verringert werden.

Alternativ ist auch denkbar, dass im koaxial montierten Zustand des Spanntopfes 15 auf dem Lageraußenring 20 des Wälzlagers 32 zumindest der Verbindungsbereich 46, der durch die Enden 47, 47' begrenzt wird, in Überlappung mit dem Bereich des größten Außendurchmessers der sphärischen Außenfläche 21 des Lageraußenrings 20 angeordnet ist. Hierdurch wird die notwendige Kraft zum Aufweiten von einem von dem Bodenelement 44 und dem Hülsenelement 45 gegenüber einem einteiligen Spanntopf reduziert, sodass die Gefahr für Schädigungen des Spanntopfes 15 durch den Prozess des Aufweitens und der Außenfläche 21 des Lageraußenrings 20 bzw. der Innenfläche 18 des Spanntopfes 15 beim Aufschieben des Spanntopfes 15 auf den Lageraußenring 20 reduziert wird.

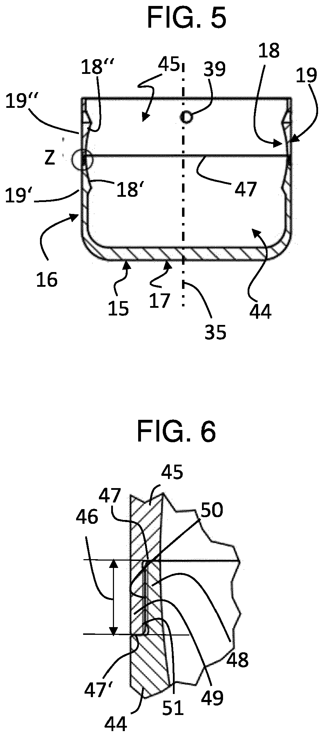

Das Bodenelement 44 und das Hülsenelement 45 sind in dem Verbindungsbereich 46 miteinander verbunden. Wie aus Figur 6 ersichtlich, weist der Ringabsatz 48 des Bodenelementes 44 hierfür ein erstes Gewinde 50 auf, in das ein komplementäres Gewinde 51 des Ringabsatzes 49 des Hülsenelementes 45 eingreift.

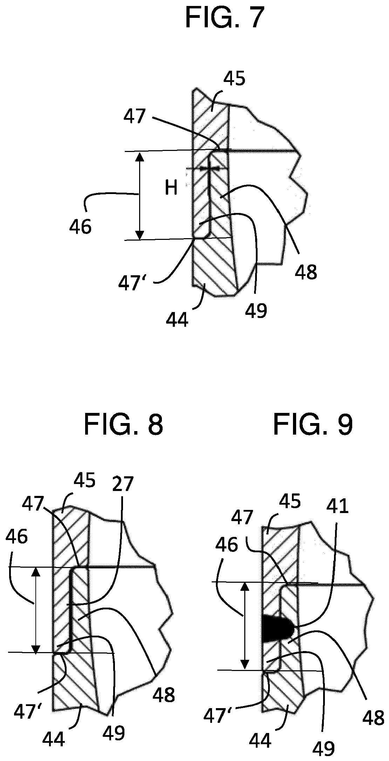

In den Figuren 7 bis 9 werden alternative Ausgestaltungen des Verbindungsbereichs 46 zwischen dem Bodenelement 44 und dem Hülsenelement 45 dargestellt.

In Figur 7 sind im montierten Zustand der Ringabsatz 48 des Bodenelementes 44 und der Ringabsatz 49 des Hülsenelementes 45 mit einem Hinterschnitt H in axialer Richtung zueinander angeordnet, sodass das Bodenelement 44 und das Hülsenelement 45 über eine Schnappverbindung miteinander verklippst sind.

In Figur 8 sind der Ringabsatz 48 des Bodenelementes 44 und der Ringabsatz 49 des Hülsenelementes 45 im Verbindungsbereich 46 mit einem Kleber 27 miteinander verklebt.

In Figur 9 sind das Bodenelement 44 und das Hülsenelement 45 im Verbindungsbereich 46 miteinander verschweißt, wobei sich eine Schweißnaht 41 von außen durch den Ringabschnitt 49 des Hülsenelementes 45 in den Ringabschnitt 48 des Bodenelementes 44 erstreckt. Die Schweißnaht 41 kann vollständig über den Umfang des Hülsenelements 45 verlaufen. Alternativ kann die Schweißnaht 41 abschnittsweise über den Umfang des Hülsenelementes 45 verlaufen oder punktförmig ausgebildet sein. Die richtige Auslenkung des Mitnehmerzapfens 29 in Schwenkrichtung um den durch die sphärische Innenfläche 18 und die sphärische Außenfläche 21 gebildeten Schwenkmittelpunkt, der auf der Längsachse 5 liegt, den Einbauverhältnissen des Kopflagers 14 in dem Mähantrieb entsprechend kann dadurch fixiert werden, dass die Spannmittel in Form der Spannschraube 11 festgezogen werden. Dadurch verringert sich der Querschnitt der Durchgangsbohrung 6 des Verbindungselementes 4 so, dass eine radiale Kraft auf den Spanntopf 15 ausgeübt wird. Da den Spanntopf 15 selbst radial elastisch ist, kann ebenfalls der Durchmesser dieses Spanntopfs 15 verringert werden und dieser presst sich mit seiner sphärischen Innenfläche 18 gegen die sphärische Außenfläche 21 des Lageraußenringes 20 an. Damit wird dieser festgesetzt. Der Lageraußenring 20 kann von seinen Abmessungen her so gewählt sein, dass er selbst keiner Verformung unterliegt und damit auch durch das Anpressen kein Einfluss auf das Lagerspiel und die Laufverhältnisse des Wälzlagers ausgeübt werden.

### Bezugszeichenliste

- 1: Mähmesser
- 2: Messerrücken
- 3: Messerklinge
- 4: Verbindungselement
- 5, 5': Längsachse
- 6: Durchgangsbohrung
- 7: erste Stirnfläche
- 8: zweite Stirnfläche
- 9: Spalt
- 10, 10': Ansatz
- 11: Spannschraube
- 12: Bohrung
- 13: Gewindebohrung
- 14: Kopflager
- 15: Spanntopf
- 16: Wand
- 17: Boden
- 18, 18', 18": sphärische Innenfläche
- 19, 19', 19": kreiszylindrische Außenfläche
- 20: Lageraußenring
- 21: sphärische Außenfläche
- 22, 22': Außenlaufbahn
- 23: Lagerinnenring
- 24, 24': Innenlaufbahn
- 25, 25': Wälzkörper
- 26: Aufnahmebohrung
- 27: Kleber
- 28: Schutzring
- 29: Mitnehmerzapfen
- 30: Befestigungsring
- 31: Schulter
- 32: Wälzlager
- 33: Schraube
- 34: Dichtung
- 35: Längsachse
- 36: Achse
- 37: Schmiermittelkanal
- 38: Kopflagerhalter
- 39: Radialbohrung
- 40: Schmiermittelraum
- 41: Schweißnaht
- 42: Schmiernippel
- 43: Schmiermittelkanaleingang
- 44: Bodenelement
- 45: Hülsenelement
- 46: Verbindungsbereich
- 47, 47': Ende Verbindungsbereich
- 48: Ringabsatz
- 49: Ringabsatz
- 50: Gewinde
- 51: Gewinde

## Patentansprüche

1. Kopflager zum Verbinden eines Mähmessers mit einem Mähmesserantrieb, umfassend:
einen Mitnehmerzapfen (29), der eine Längsachse (5') definiert,
ein Rotationslager (32) mit einer sphärischen Außenfläche (21) und
einen Spanntopf (15) mit einer komplementär zur Außenfläche (21) des Rotationslagers (32) gestalteten sphärischen Innenfläche (18),
wobei das Rotationslager (32) auf dem Mitnehmerzapfen (29) sitzt und von der sphärischen Innenfläche (18) des Spanntopfes (15) aufgenommen ist,
**dadurch gekennzeichnet,**
**dass** der Spanntopf (15) zumindest zwei zusammengefügte separate Bauteile, nämlich ein Bodenelement (44) und ein Hülsenelement (45), umfasst.

2. Kopflager nach Anspruch 1,
**dadurch gekennzeichnet,**
**dass** das Bodenelement (44) und das Hülsenelement (45) in einem Verbindungsbereich (46) miteinander gefügt sind.

3. Kopflager nach Anspruch 2,
**dadurch gekennzeichnet,**
**dass** das Bodenelement (44) und das Hülsenelement (45) in dem Verbindungsbereich (46) in radialer Überdeckung zueinander angeordnet sind.

4. Kopflager nach einem der Ansprüche 2 oder 3,
**dadurch gekennzeichnet,**
**dass** der Verbindungsbereich (46) in radialer Überdeckung, bezogen auf eine Längsachse des Spanntopfes (15), mit dem Bereich des größten Innendurchmessers der sphärischen Innenfläche (18) des Spanntopfes (15) angeordnet ist.

5. Kopflager nach einem der Ansprüche 1 bis 4,
**dadurch gekennzeichnet,**
**dass** eine Innenfläche (18') des Bodenelements (44) und eine Innenfläche (18") des Hülsenelements (45) in axialer Richtung jeweils zueinander hinterschnittfrei angeordnet sind.

6. Kopflager nach einem der Ansprüche 2 bis 5,
**dadurch gekennzeichnet,**
**dass** bei koaxialer Anordnung des Spanntopfes (15) mit dem Mitnehmerzapfen (29) der Verbindungsbereich (46) in radialer Überdeckung mit dem Bereich, bezogen auf die Längsachse (5'), des größten Außendurchmessers der sphärischen Außenfläche (21) des Rotationslagers (32) ist.

7. Kopflager nach einem der Ansprüche 2 bis 6,
**dadurch gekennzeichnet,**
**dass** bei koaxialer Anordnung des Spanntopfes (15) mit dem Mitnehmerzapfen (29) ein axiales Ende (47, 47') des Verbindungsbereichs (46) in radialer Überdeckung mit dem Bereich, bezogen auf die Längsachse (5'), des größten Außendurchmessers der sphärischen Außenfläche (21) des Rotationslager (32) ist.

8. Kopflager nach einem der Ansprüche 1 bis 7,
**dadurch gekennzeichnet,**
**dass** das Bodenelement (44) einen axial vorstehenden Kragen (48) aufweist und
**dass** das Hülsenelement (45) einen axial vorstehenden Kragen (49) aufweist, der in radialer Überdeckung mit dem Kragen (48) des Bodenelementes (44) angeordnet ist.

9. Kopflager nach Anspruch 8,
**dadurch gekennzeichnet,**
**dass** der Kragen (48) des Bodenelementes (44) radial innenliegend zum Kragen (49) des Hülsenelementes (45) angeordnet ist

10. Kopflager nach Anspruch 8,
**dadurch gekennzeichnet,**
**dass** der Kragen (49) des Hülsenelementes (45) radial innenliegend zu dem Kragen (48) des Bodenelementes (44) angeordnet ist.

11. Kopflager nach einem der Ansprüche 8 bis 10,
**dadurch gekennzeichnet,**
**dass** der Kragen (48) des Bodenelementes (44) und der Kragen (49) des Hülsenelementes (45) mit einer Überdeckung in axialer Richtung zueinander angeordnet sind.

12. Kopflager nach einem der Ansprüche 2 bis 11,
**dadurch gekennzeichnet,**
**dass** das Bodenelement (44) und das Hülsenelement (45) im Verbindungsbereich (46) geschweißt, gelötet oder geklebt sind.

13. Kopflager nach Anspruch 12,
**dadurch gekennzeichnet,**
**dass** das Bodenelement (44) und das Hülsenelement (45) im Verbindungsbereich (46) durch eine Laserschweißnaht (41) gefügt sind, die sich durch einen von dem Kragen (48) des Bodenelementes (44) und dem Kragen (49) des Hülsenelementes (45) bis in den anderen von dem Kragen (48) des Bodenelementes (44) und dem Kragen (49) des Hülsenelementes (45) erstreckt.

14. Kopflager nach einem der Ansprüche 8 bis 13,
**dadurch gekennzeichnet,**
**dass** das Bodenelement (44) und das Hülsenelement (45) an ihren jeweiligen Kragen (48, 49) komplementäre Gewinde (50, 51) aufweisen, die gegenseitig in Eingriff sind.

15. Kopflager nach einem der Ansprüche 1 bis 14,
**dadurch gekennzeichnet,**
**dass** das Hülsenelement (45) zumindest eine radiale Bohrung (39) aufweist,
wobei bei koaxialer Anordnung des Spanntopfes (15) mit dem Mitnehmerzapfen (29) die zumindest eine radiale Bohrung (39) teilweise in radialer Überdeckung mit der sphärischen Außenfläche (21) des Rotationslagers (32) angeordnet ist.
